Europäisches Patentamt

(19) European Patent Office ·

Office européen des brevets

(11) Publication number:

**0 088 505**
**B1**

(12) EUROPEAN PATENT SPECIFICATION

(45) Date of publication of patent specification: 01.06.88

(21) Application number: 83300452.6

(22) Date of filing: 28.01.83

(51) int. Cl.⁴: **B 23 B 51/04**

(54) Drill and disposable inserts therefor.

(30) Priority: 26.02.82 GB 8205711
26.02.82 GB 8205689
26.02.82 GB 8205690

(43) Date of publication of application:
14.09.83 Bulletin 83/37

(45) Publication of the grant of the patent:
01.06.88 Bulletin 88/22

(84) Designated Contracting States:
AT BE CH DE FR GB IT LI NL SE

(56) References cited:
DE-A-2 840 610
GB-A-1 546 981
GB-A-2 000 704
US-A-3 187 406
US-A-4 268 198

MACHINES & TOOLING, vol. 49, no. 4, April
1978, Melton Mowbray, V.K. SHMARIKHIN et
al. "Cemented carbide tools for centreless
turning lathes", pages 20-22

(73) Proprietor: GENERAL ELECTRIC COMPANY
1 River Road
Schenectady New York 12305 (US)

(72) Inventor: Hale, Alan Arthur
Byways Shootersway Lane
Berkhamsted Herts HP4 3NN (GB)

(74) Representative: Turner, Paul Malcolm
URQUHART DYKES & LORD 8 Lindsay Road
Poole Dorset BH13 6AR (GB)

EP 0 088 505 B1

Courier Press, Leamington Spa, England.

## Description

The present invention is concerned with drills and specific disposable inserts therefore. In particular, the disposable inserts used with the drill have a pair of obtuse angled cutting surfaces which both engage the workpiece and are preferably octagonal shaped inserts.

Drilling tools with disposable inserts are well known. Patent Specification GB—A—1,546,981 describes a drill having a shank with two axially extending chip recesses or flutes and inserts positioned such that the cutting edges produce the resulting hole. The inserts are positioned with a radial location such that the inner insert sweeps a radius including the turning axis of the drill, and the outer insert sweeps a radius overlapping that of the inner insert. One problem with such a drill is that forces on each of the inserts are unequal because of their differing radial distance from the turning axis of the drill. This problem is partly overcome by altering the radial location of the inner insert away from the peripheral insert by a sufficient amount to balance the forces or changing the size of the inserts.

Patent Specification GB—A—2,000,704 describes a drilling or boring tool which may have one or more hexagonal inserts. When a plurality of inserts are used, the inserts are arranged at equal angular radial spacings relative to the turning axis of the drill. In addition, the hexagonal insert has two cutting edges which make substantially equal angles with a line parallel to the turning axis of the drill. In such a drill, when the cutting edges are viewed longitudinally, the outer insert presents an acute angle at the outer cutting point. During rotation this cutting point can be easily damaged.

The present invention provides an indexable disposable insert having six contiguous edge faces of equal length and two polygonal side faces having alternate corners of equal obtuse angles, and a cutting edge formed at a junction of at least one of the side faces and at each edge face, one of said cutting edges having a chip removal element spaced rearwardly therefrom, the chip removal element being of substantially equal width therealong, wherein the insert has at least six contiguous edge faces arranged in pairs, the alternate cutting edges having a second chip removal element spaced rearwardly therefrom, the second chip removal element having a width which tapers increasingly from the obtuse angle juncture outwardly to a corner of the insert.

The present invention also provides an indexable disposable insert having eight contiguous edge faces of equal length and two octagonal side faces wherein the insert has four alternate corners of equal obtuse angles and remaining alternate corners of different angle or angles, the equal obtuse angles being greater than the remaining angles, cutting edges being formed at the junction of at least one of the octagonal side faces and each of the eight contiguous edge faces.

In a further form the present invention provides a drilling tool having a shank and plurality of indexable disposable cutting inserts therein, the assembly being as claimed in claim 6.

The present invention will be further described by way of example only, with reference to the accompanying drawings, in which:

Fig. 1 is a side view of an embodiment of the drill of the present invention;

Fig. 2 is a further side view of the drill of Fig. 1 rotated through 180°;

Fig. 3 is an axial end view of the drill shown in Fig. 1;

Fig. 4 is an enlarged view of the insert as shown in Fig. 1;

Fig. 5 is a partial cross sectional view of Fig. 4 on line AA;

Fig. 6 is a plan view of a hexagonal insert with improved chip removal means; and

Fig. 7 is a partial cross sectional view of the embodiment of Fig. 6.

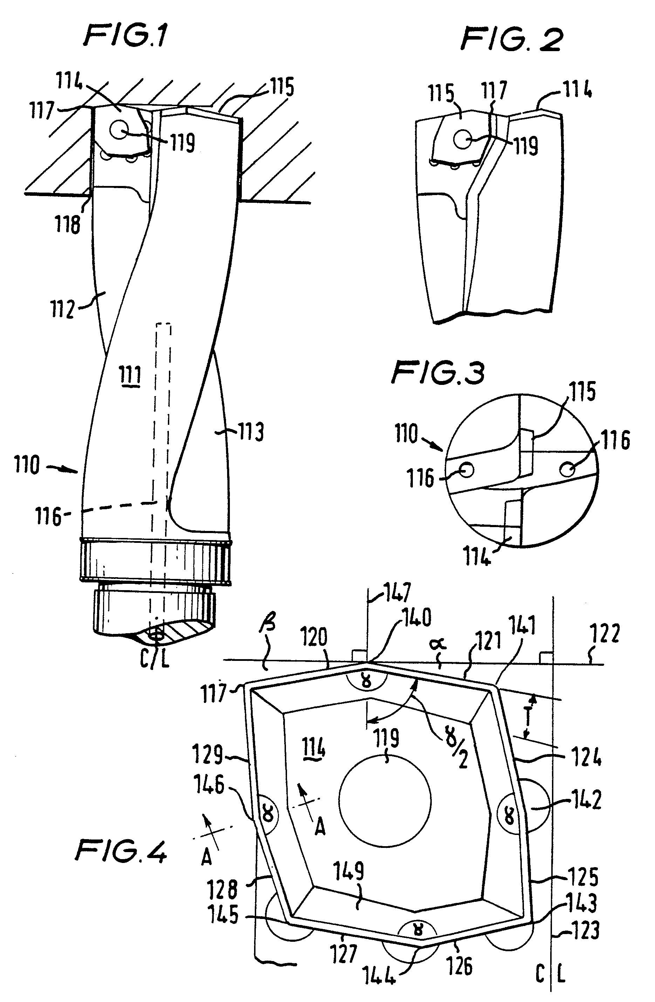

Referring to Figs. 1 and 2, a drill 110 has a shank 111 with drill flutes 112 and 113 extending to a pair of cutting inserts 114, 115. The inserts 114, 115 are of the type having eight sides with four pairs of alternate obtuse angles. The center of the drill shank has a cooling channel 116 passing therethrough, which subdivides to supply coolant or cutting fluid to each of the inserts. Fig. 3 shows an axial end view of the drill 110 with the cooling passage subdivided so that cutting fluid passes to each of the inserts from cooling channel 316. The arrangement of the inserts in relation to the axis is such that the cutting edges of each insert are disposed along a diameter of the drill. Insert 114 has an outer cutting corner 117 which extends beyond the diameter of the shank 111 such that the bore 118, which is formed during drilling, has a larger diameter than the diameter of the shank 111 as illustrated in Figs. 1, 2 and 3. Inserts 114 and 115 are positioned so that the total cross sectional area of the bore 118 will be cut or swept when the drill revolves. The area which each of inserts 114 and 115 sweep from a cutting path overlaps the cutting path of the other insert. In addition, the cutting path of the inner insert 115 slightly overlaps the turning axis of the drill. The shank 111 of the drill is adapted to receive the inserts 114 and 115 in conventional manner. The drill 110 has two pockets, one to receive each of the inserts 114 and 115. The inserts 114 and 115 are inset into the pockets and are clamped therein by known clamping systems such as screws, lock pins or clamps.

The insert 114 is attached to the drill shank by means of a screw, lock pin or clamp 119 of conventional type, although other attachment means are possible. The insert 114, as more clearly shown in Fig. 4, is the outer insert of the drill. It presents two cutting edges 120 and 121 to the workpiece with approach angles $\beta$ and $\alpha$ to a notional line 122 perpendicular to the turning axis 123 of the drill. In Fig. 4, $\alpha = \beta$ but $\alpha - \beta$ may vary by up to 8° to balance turning forces between the radially outer cutting edge 120 and the radially inner cutting edge 121. Similar or different approach angles may also be used with the radially inner insert 115 (Fig. 2) again depending on the balance of the turning forces both between the radially inner and outer cutting edges and between the radially inner and outer inserts.

Referring now to Fig. 4, as the insert 114 has octagonal side faces there are three further pairs of cutting edges 124, 125; 126, 127; and 128, 129. The geometry of the insert as shown in Fig. 4 is such that each of the pairs of the cutting edges is defined by an angle γ which is preferably 160° although it may vary from 135° to 170°. If the angle 135° is chosen then the octagon will be completely regular, i.e., each corner angle will be exactly the same. Thus, it is essential that alternate angles are equal.

The corner 117 of the insert extends beyond the radius of the drill such that the shank of the drill 110 clears the bore 118 during drilling. This has already been described above in relation to Fig. 1. The important point to note with regard to the geometry is that corner 117 is also an obtuse angle, i.e., is greater than 90°, usually about 95°. The obtuse angled corner 117 provides the insert with greater strength at this point than prior art drills with hexagonal or trigonal inserts because, in a trigonal insert, the equivalent corner will be an acute angle substantially less than 90°.

In prior art drills, one problem, as indicated above, is the unequal forces which are applied to inserts when the drill turns in relation to the workpiece. The inserts themselves are symmetrical (although the ones shown in the drawings are not symmetrically along a notional line dividing each of the equal obtuse angles) and they are arranged such that the cutting edges of each insert lie along a diameter of the drill when viewed axially. The outer insert 114 of Fig. 1 will travel faster than the inner insert 115 over the face of the workpiece during one revolution because of the greater circumference of the area swept by it. Because of this, there can be an increased force on the outer insert. To overcome this, the insert 114 can be canted. In the drill shank 111, the pocket to receive the insert can be positioned such that each insert is received on the cant, i.e., α is greater than β up to about 8°. Thus, the cutting edges on one side of the obtuse angle α is closer to the notional line perpendicular to the drill turning axis and offers less resistance to turning.

The drill maintains the equal radial spacing of the cutting inserts when viewed axially such that swarf removal from each of the inserts does not become an obstruction for the insert which is radially displaced from the other. The radial symmetry of the drill is therefore thought to be an advantage.

It is preferred that each of the inserts on the drill is exactly similar in size and geometry. The approach angle of each cutting edge is also preferably the same. The approach angle is defined as the angle each cutting angle makes with a line extending perpendicular to the turning axis of the drill. As each insert has two cutting edges, when the drill is turning the approach angle of each of these cutting edges are defined as α and β respectively. The angle γ defining the obtuse angle may vary from 120° to 170° and is preferably 160°. When positioned in the shank, the α−β may vary up to about 8°. Preferably, the angles are the same or can vary by a small amount, i.e., up to 8°. If angle β is considered to be the approach angle radially further away from a turning axis of the drill then the value of β can be less than the value of α or vice versa. In one embodiment, the angle α is in the range 78° to 79° and angle is in the range 81° to 82°, preferably 78° 31' and 81° 30' respectively. All the angles may have a tolerance of ±30'.

One preferred drill arrangement of the present invention is one in which there is one pair of octagonal cutting inserts arranged with their cutting edges along a diameter of the drilling tool, although a greater number of inserts may be employed, and along other diameters.

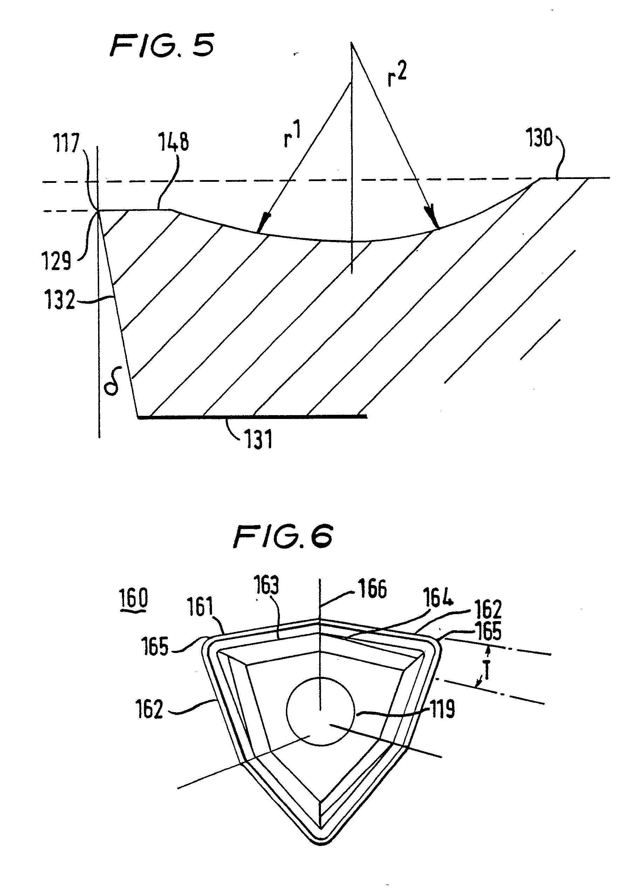

As shown in cross section in Fig. 5, the octagonal side face 130 has a parallel octagonal side face 131. These side faces are connected by edge faces 132 (and 133, 134, 135, 136, 137, 138, 139 respectively, not shown). The cutting edges 120, 121 etc. are formed at junctions of the edge and side faces. In a positive raked insert the edge faces 132 are raked δ degrees from a perpendicular to side face 131 to provide clearance during drilling. The value of δ may vary between about 5° and 12° but is preferably 7°. The eight edge faces join end to end to form the eight contiguous edge faces of the insert 114. Each of the corners 117, 140, 141, 142, 143, 144, 145, 146 of the insert may be rounded to facilitate moulding of the insert and provide a stronger corner. However, at each junction the extension of adjacent side faces would meet in an obtuse angle.

The geometry of the insert 114 may vary to provide four identical pairs of cutting edges of equal length, each arranged about an obtuse angle. In the example shown in the drawings, the geometry is assymetrical when it is considered along the line of symmetry of the cutting edges, i.e., a notional line 147 dividing angle γ into two angles γ/2. In use such an insert 114 is reversible if it is a negative rake insert, or can be used in conjunction with a second insert, if it is a positive rake insert. The indexable inserts of the present invention have obtuse angles which may vary in the range 135° to 170°. The most useful obtuse angles for the insert are in the range 150 to 165°, preferably 160°.

The preferred arrangement is for an indexable disposable insert having eight contiguous edge faces of equal length and two octagonal side faces having four alternate corners with equal obtuse angles, the opposing pairs of angles of the octagonal side faces being equal. One arrangement has four opposing equal obtuse angles (140, 144, 142, 146) forming the alternate corners with equal obtuse angles; two opposing obtuse angles (117, 143) of a first value, which may approximate a right angle and two opposing obtuse angles (141, 145) of a second value greater than that of the first value. Specifically, an example of the insert of the present invention has four opposing obtuse angles of 160°, two opposing angles of 95° and two opposing angles of 125°. All the angles may have tolerances of ±30′. In a preferred insert, two of the angles, apart from the four equal obtuse angles, may be in the range of greater than 90° but less than 100°. As another example, the insert may have the following angles, angles 117, 143 being 95°, angles 141, 145 being 125° and angle γ, 160°. The tolerance of each angle may be ±30′ for example.

The geometry of the insert provides a symmetrical insert. However, when the insert is positioned in the drill shank such that two cutting edges are presented to the workpiece as for example shown in Figs. 1 and 2, the inserts are not arranged symmetrically and the inner and outer inserts 114 and 115 are mirror images of one another. This facilitates indexing of the inserts. Referring to Fig. 4, in the outer insert cutting edges 120, 121 are presented to the workpiece. When these are worn, the screw, clamp or lock pin 119 is released and the insert is turned through 180° and such that cutting edges 126, 127 of the same insert are used. A similar 180° turning of the inner insert is also carried out. After the new cutting edges which are presented to the workpiece are worn, the outer insert is then positioned in the inner insert pocket, replacing the inner insert in the outer pocket after turning both through 90°. Thus, all four pairs of cutting edges of both the inner and outer insert are used alternately between the inner and outer insert position. To receive the corner of the insert 117 as shown in Fig. 2 (i.e. the mirror image of the corner shown in Fig. 1), the flute of the drill is cut away beyond the center line of the drill. The drills of this type are generally of any suitable size. However, the advantageous sizes for a drill using a pair of inserts is about 16 mm to 75 mm.

Although a drill with a pair of inserts has been described, it is within the scope of the present invention to provide a drill with more than two inserts according to the desired size of the drill. In this case, the cutting path of each insert overlaps the cutting path of the next insert such that the rotation of the drill will provide cutting action across the face. As the inserts are assymmetrical as far as the cutting action is concerned, when they have become worn, it is preferred to use the inserts in pairs according to the diameter of the drill desired. Thus, for example, two pairs of inserts may be used in a drill either in line such that the cutting edges all lie along a diameter of the drill or with one pair of inserts lying at right angles to the other pair with four flutes to the drill instead of two. Other combinations of pairs of inserts is also possible. Each pair of inserts may be of different sizes and geometry, if desired, although it is preferred that the inserts are identical within each pair to facilitate indexing and with most drills the pairs of inserts are preferably identical in geometry.

The inserts of this invention have conventional chip removal elements generally referred to as chip breakers in the form of grooves, dimples, recesses etc. in or on the surface of the insert which are generally moulded therein. Fig. 4 shows an insert 114 having a top side face 130 and a bottom side face 131 with an edge face 132 raked by δ°, preferably 7°, forming a cutting edge 129. Behind the cutting edge 129, is a peripheral land 148 which extends around the periphery of the insert as shown. This provides strength for the cutting edge 129. Peripheral land 148 is generally lower than the surface of the octagonal side face 132. Behind the peripheral land 148 is a double curve groove 149. As shown in Fig. 5, the groove 149 is curved with a double radius of curvature. The first part of the groove 149 has a radius of curvature $r^1$ which is less than radius $r^2$ of the second part of the groove. The groove width may be uniform around the insert 111. In another embodiment, the groove behind alternate cutting edges 129 (121, 125, 127) may taper outwardly in width from the notional line 147 dividing the obtuse angle. This is shown in Fig. 4. The taper, $T$, may vary but the width of the groove increases generally between 2° and 12°, preferably 5° from the parallel relative to the cutting edge 129. The angle of $T$ is 5° as shown in Fig. 4. This taper is provided either by varying the length of the radii along the groove or by having the land width vary. The advantage of a tapered chip groove of this type comes to the fore when the cutting edges are used in a rotational cutting apparatus such as a drill. The cutting forces on each of the cutting edges may differ due to the different radial speeds of each of the cutting edges. This is particularly the case when the axis of rotation of the insert is to one side of the notional line 147 dividing the obtuse angle 150.

Both chip breaker elements when considered in the place of the polygonal side face may be tapered outwardly in width from the obtuse angle although it is preferred that each alternate groove only will be tapered in width inwardly from the obtuse angle 140. The taper will normally be applied to the chip breaker on the insert according to the final use of the insert. For example, some inserts may be used in right hand drills and will require the tapered chip breaker between angles 140 and 141 as shown in Fig. 4. If an insert is required for a left hand drill the taper will be between angles 140 and 117.

Another form of chip breaker is a series of spaced apart dimples or depressions in the face of the insert. The depression may be uniformly spaced circular indentations which are positioned behind each of the cutting edges. The chip breaking dimples are such that they become larger as they extend away from each of the equal obtuse angles to form a taper on one or both sides of each of the obtuse angles.

By having a tapered groove behind the radially inner cutting edge 121, the forces between the outer cutting edge 120 and inner cutting edge 121 can be balanced. The chips produced by the cutting action of the insert from each cutting edge, each are uniform and the power consumption needed by the drill to operate is reduced by as much as 15% in consequence. Because the balance between the inner and outer cutting edges 120, 121 are more even, there is a stabilizing effect on the whole drill.

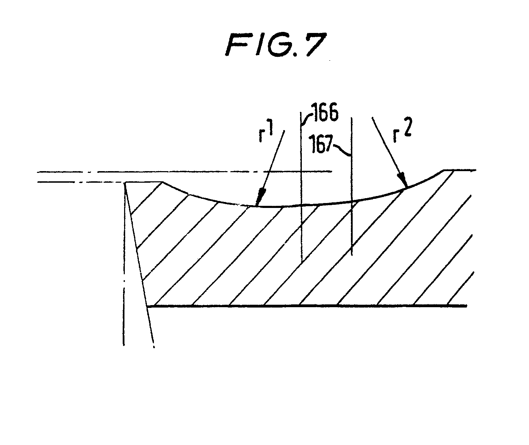

As heretofore described, this invention relates to an indexable, disposable insert where a pair of obtuse angled cutting surfaces engage the workpiece in use. An octagonal configuration becomes a preferred embodiment, for one reason, because the outermost cutting surfaces are also at an obtuse angles. An improved chip removal configuration or groove is applicable to most inserts using the dual, obtuse angled, cutting edges. For convenience, the improved chip removal configuration of this invention is shown in Figs. 6 and 7.

In Fig. 6 the insert 160 comprises a series of plural cutting edges 161 and 162 etc. disposed at an obtuse angle to each other and adapted for drilling in the conventional clockwise manner, left to right outside of the paper. Chip breaking grooves 163 and 164 etc. are arranged about the periphery of the insert and are inset from the edge by a land 165, as illustrated in Fig. 7. The center lines, 166 for example, bisects a pair of cutting edges 161 and 162 so that generally equal angles are formed with the edges. The groove 163 behind one cutting edge 161 on one side of line 166 has a groove width which is substantially uniform in width. The groove 164 on the other side of line 166 and behind cutting edge 162 has an increasing width, the angle of taper being up to about 12° and preferably in the range of 2° to 10° relative to the parallel groove width. A taper of about 5° is preferred. As illustrated in Fig. 7, the groove 163 cross section may comprise two radii, the one nearest the cutting edge being generally less than the one furthest from the cutting edge. In order to provide this kind of taper, two grooving tools may be employed. One tool of $r^1$ provides a parallel groove, and the other tool of $r^2$ provides an overlapping groove whose centerline is angled to the centerline of the first groove. Alternately stated, the centerlines of the radii are coincident at one point on the groove, usually the starting point of the groove 166, Fig. 6 and separate at the other end of the groove 166, 167, Fig. 7. The groove 164 cross section for cutting edge 162 is accommodated by having the bottom of groove 164 generally flat and the centerlines 166 and 167 of the radii become separated as the groove widens towards one end.

The cross sections of the grooves need not be arcuate. They can comprise combinations of straight and arcuate surfaces. They may be channels with a liner slope of the cutting edge or front and a greater slope at the rear. Only a flat bottom surface needs to be widened from the diverging radii taper as described. The improved taper of the insert is applicable to tools having the dual cutting surface and obtuse angle configuration. It is shown in an octagonal insert 114 of Fig. 4 and a six-sided insert 160 of Fig. 6.

By means of the taper better chip control and force balancing is achieved for overall stabilization of the drill. A tapered groove is achieved with a constant land width and where the depth of the groove remains constant.

Although the subject invention has been described by reference to a preferred embodiment, it is apparent that other modifications could be devised by those skilled in the art that would fall within the scope of the subject invention as defined by the appended claims.

**Claims**

1. An indexable disposable insert (160) having six contiguous edge faces of equal length and two polygonal side faces having alternate corners of equal obtuse angles, and a cutting edge formed at a junction of at least one of the side faces and at each edge face, one of said cutting edges having a chip removal element (163) spaced rearwardly therefrom, the chip removal element being of substantially equal width therealong, characterised in that the insert has at least six contiguous edge faces arranged in pairs, the alternate cutting edges having a second chip removal element (164) spaced rearwardly therefrom, the second chip removal element (164) having a width which tapers increasingly from the obtuse angle juncture outwardly to a corner of the insert.

2. An insert as claimed in claim 1 characterised in that the chip removal elements (163, 164) are grooves or channels.

3. An insert as claimed in claim 2 characterised in that the second chip removal element (164) is a groove which tapers in width between 2° and 10°.

4. An insert as claimed in claim 2 characterised in that the taper is about 5°.

5. An insert as claimed in any one of claims 2 to 4 wherein the chip removal element is a groove characterised in that the groove profile has a first radius ($r^1$) extending from the cutting edge on a land (148) adjacent thereto to the lowest point of the groove and a second larger radius ($r^2$) extending from the lowest point of the groove to the polygon side surface (130), the center lines of said radii ($r^1$, $r^2$) being coincident at one point on the groove and separate at an end of the groove.

6. A drill (110) comprising a shank (111) and pocket means to mount a plurality of indexable disposable inserts (114) as claimed in any of the preceding claims at one end of said shank, said pocket means adapted to orient an insert having two cutting edges (120, 121) which meet at an obtuse angle juncture (140) where the juncture and both cutting surfaces (120, 121) engage the workpiece so that the obtuse angle is essentially divided into equal angles (γ/2) about its centerline (147), and where the tapered chip removal element is behind a cutting edge (121) which is most radially inwardly oriented of the two surfaces.

7. An indexable disposable insert (114) having eight contiguous edge faces of equal length and two octagonal side faces characterised in that the insert has four alternate corners (140, 142, 144, 146) of equal obtuse angles and remaining alternate corners (117, 141, 143, 145) of different angle or angles, the equal obtuse angles being greater than the remaining angles, cutting edges (120, 121, 124, 125, 126, 127, 128, 129) being formed at the junction of at least one of the octagonal side faces (130, 131) and each of the eight contiguous edge faces (132).

8. An insert as claimed in claim 7 characterised in that the obtuse angles (140, 142, 144, 146) are equal and are within the range 135° to 170°.

9. An insert as claimed in claim 7 characterised in that the obtuse angles (140, 142, 144, 146) are equal and are within the range 150° to 165°.

10. An insert as claimed in claim 7 characterised in that the obtuse angles (140, 142, 144, 146) are equal and are 160°±30'.

11. An insert as claimed in claim 7 characterised in that the four equal alternate obtuse angles (140, 142, 144, 146) are 160°±30', two opposing angles (141, 145) are 125°±30' and the two further opposing obtuse angles (117, 143) are 95°±30'.

12. A drill (111) comprising a shank (111) and a plurality of cutting inserts (114, 115) of any one of claims 7 to 11, the inserts (114, 115) being arranged such that they each have a different radial displacement from the turning axis of the drill, the inner insert (115) having a cutting path which overlaps the turning axis of the drill and each next radially outer insert (115) having a cutting path which overlaps the cutting path of the next inner insert (114), the cutting path of each insert (114, 115) being formed by the cutting edges either side of one of the equal obtuse angles (140, 142, 144, 146) of the insert.

13. A drill as claimed in claim 12 characterised in that at least a pair of octagonal inserts (114, 115) are arranged with their cutting edges along a diameter of the drill.

14. A drill as claimed in claim 13 characterised in that two pairs of octagonal inserts (114) are arranged with their cutting edges along at least one line diameter of the drill.

## Patentansprüche

1. Einstellbarer Wegwerfeinsatz (160) mit sechs angrenzenden Kantenflächen gleicher Länge und zwei polygonalen Seitenflächen mit alternierenden Ecken gleicher stumpfer Winkel sowie einer Schneidkante, die an einem Übergang von mindestens einer der Seitenflächen und jeder Kantenfläche gebildet ist, wobei eine der Schneidkanten ein Element (163) zum Entfernen von Spanen im Abstand rückwärtig davon aufweist und dieses Späne entfernende Element sich mit im wesentlichen gleicher Breite längs dazu erstreckt, dadurch gekennzeichnet, daß der Einsatz mindestens sechs angrenzende Kantenflächen aufweist, die in Paaren angeordnet sind, wobei die alternierenden Schneidkanten ein zweites Element (164) zum Entfernen von Spänen aufweisen, das im Abstand rückwärtig dazu angeordnet ist, wobei dieses zweite Element (164) zum Entfernen von Spänen eine Breite aufweist, die sich von dem stumpfwinkligen Übergang nach außen zu einer Ecke des Einsatzes hin zunehmend vergrößert.

2. Einsatz nach Anspruch 1, dadurch gekennzeichnet, daß die Elemente (163, 164) zum Entfernen von Spänen Rillen oder Kanäle sind.

3. Einsatz nach Anspruch 2, dadurch gekennzeichnet, daß das zweite Element (164) zum Entfernen von Spänen eine Rille ist, deren Breite sich zwischen 2° und 10° erweitert.

4. Einsatz nach Anspruch 2, dadurch gekennzeichnet, daß die Abschrägung etwa 5° beträgt.

5. Einsatz nach irgendeinem der Ansprüche 2 bis 4, wobei das Element zum Beseitigen von Spänen eine Rille ist, dadurch gekennzeichnet, daß das Rillenprofil einen ersten Radius ($r^1$), der sich von der Schneidkante auf einem Steg (148) benachbart dazu bis zum tiefsten Punkt der Rille erstreckt und einen zweiten größeren Radius ($r^2$) aufweist, der sich vom tiefsten Punkt der Rille bis zur polygonalen Seitenoberfläche (130) erstreckt, wobei die Zentrumslinien der genannten Radien ($r^1$, $r^2$) an einem Punkt der Rille zusammenfallen und sich an einem Ende der Rille trennen.

6. Boher (110) mit einem Schaft (111) und einer Behältereinrichtung zum Anbringen mehrerer einstellbarer Wegwerfeinsätze (114) nach irgendeinem der vorhergehenden Ansprüche an einem Ende des Schaftes, wobei die Behältereinrichtung einen Einsatz mit zwei Schneidkanten (120, 121), die sich an einem Übergang (140) im stumpfen Winkel treffen, orientieren kann, wobei der Übergang und die beiden Schneidoberflächen (120, 121) im Eingriff mit dem Werkstück stehen, sodaß der stumpfe Winkel durch seine Zentrumslinie (147) im wesentlichen in zwei gleiche Winkel ($\gamma/2$) geteilt ist, und das schräge Element zum Entfernen der Späne sich hinter einer Schneidkante (121) befindet, die radial am meisten nach innen bezüglich der beiden Oberflächen orientiert ist.

7. Einstellbarer Wegwerfeinsatz (114) mit acht angrenzenden Kantenflächen gleicher Länge und zwei oktagonalen Seitenflächen, dadurch gekennzeichnet, daß der Einsatz vier alternierende Ecken (140, 142, 144, 146) gleicher stumpfer Winkel und übrige alternierende Ecken (117, 141, 143, 145) verschiedenen Winkels oder verschiedener Winkel aufweist, wobei die gleichen stumpfen Winkel größer sind als die übrigen Winkel, und Schneidkanten (120, 121, 124, 125, 126, 127, 128, 129) an dem Übergang von mindestens einer der oktagonalen Seitenflächen (130, 131) und jeder der acht angrenzenden Kantenflächen (132) gebildet sind.

8. Einsatz nach Anspruch 7, dadurch gekennzeichnet, daß die stumpfen Winkel (140, 142, 144, 146) gleich sind und im Bereich von 135 bis 170° liegen.

9. Einsatz nach Anspruch 7, dadurch gekennzeichnet, daß die stumpfen Winkel (140, 142, 144, 146) gleich sind und im Bereich von 15 bis 165° liegen.

10. Einsatz nach Anspruch 7, dadurch gekennzeichnet, daß die stumpfen Winkel (140, 142, 144, 146) gleich sind und eine Größe von 160°±30' haben.

11. Einsatz nach Anspruch 7, dadurch gekennzeichnet, daß die vier gleichen alternierenden stumpfen Winkel (140, 142, 144, 146) eine Größe von 160°±30' haben, die beiden gegenüberliegenden Winkel (141, 145) eine Größe von 125°±30' haben und die beiden weiteren gegenüberliegenden stumpfen Winkel (117, 143) eine Größe von 95°±30' haben.

12. Bohrer (110) mit einem Schaft (111) und mehreren Schneideinsätzen (114, 115) nach irgendeinem der Ansprüche 7 bis 11, wobei die Einsätze (114, 115) so angeordnet sind, daß sie jeweils eine verschiedene radiale Versetzung von der Drehachse des Bohrers haben, der innere Einsatz (115) einen Schneidweg hat, der die Drehachse des Bohrers überlappt und der radial nächste äußere Einsatz (115) einen Schneidweg hat, der den Schneidweg des nächsten inneren Einsatzes (114) überlappt und die Schneidwege jedes Einsatzes (114, 115) durch die Schneidkanten jeder Seite eines der gleichen stumpfen Winkel (140, 142, 144, 146) des Einsatzes gebildet sind.

13. Bohrer nach Anspruch 12, dadurch gekennzeichnet, daß mindestens ein Paar oktagonaler Einsätze (114, 115) mit ihren Schneidkanten längs eines Durchmessers des Bohrers angeordnet sind.

14. Bohrer nach Anspruch 13, dadurch gekennzeichnet, daß zwei Paare oktagonaler Einsätze (114) mit ihren Schneidkanten längs mindestens eines Durchmessers des Bohrers angeordnet sind.

## Revendications

1. Grain rapporté jetable, indexable (160) comportant six faces d'arête contiguës d'égale longueur et deux faces polygonales de côté ayant des coins alternés d'angles obtus égaux, et une arête coupante, formée à la jonction d'au moins l'une des faces de côté et à chaque face d'arête, l'une des arêtes coupantes ayant un élément d'évacuation des copeaux (163) espacé vers son arrière, l'élément d'évacuation des copeaux ayant sensiblement la même largeur sur toute sa longueur, caractérisé en ce que le grain rapporté comporte au moins six faces contigüs d'arête disposées en paires, les arêtes coupantes alternées comportant un second élément d'évacuation des copeaux (164) espacé dans la direction de son arrière, le second élément d'évacuation des copeaux (164) ayant une largeur qui augmente progressivement entre la jonction des angles obtus dans la direction de l'extérieur et un coin du grain rapporté.

2. Grain rapporté selon la revendication 1, caractérisé en ce que les éléments d'évacuation des copeaux (163, 164) sont des rainures ou des canaux.

3. Grain rapporté selon la revendication 2, caractérisé en ce que le second élément d'évacuation des copeaux (164) est une rainure taillée en pointe entre 2° et 10°.

4. Grain rapporté selon la revendication 2, caractérisé en ce que la taille en pointe est environ 5°.

5. Elément rapporté selon l'une quelconque des revendications 2 à 4, dans lequel l'élément d'évacuation des copeaux est une rainure, caractérisé en ce que le profile de la rainure présente un premier rayon $(r^1)$ s'étendant entre l'arête coupante sur un méplat (148) contigu à celle-ci et le point le plus bas de la rainure et un second rayon plus grand $(r_2)$ s'étendant entre le point le plus bas de la rainure et la surface (130) du côté du polygone, les axes des rayons $(r^1, r^2)$, coïncidant à un point de la rainure et étant séparée à une extrémité de la rainure.

6. Forêt (110) comprenant une queue (111) et un moyen d'alvéole pour monter une multitude de grains rapportés jetables indexables (114) selon l'une quelconque des revendications précédentes à une extrémité de la queue, le moyen d'alvéole étant destiné à orienter un grain rapporté présentant deux arêtes coupantes (120, 121) qui se rencontrent à une jonction d'angles obtus (140) où la jonction et les deux surfaces coupantes (120, 121) sont en contact avec la pièce de sorte que l'angle obtus est essentiellement divisé en angles égaux $(\gamma/2)$ autour de son axe (147), et où l'élément taillé en pointe d'évacuation des copeaux est situé à l'arrière d'une arête coupante (121) qui est celle des deux surfaces la plus orientée radialement vers l'intérieur.

7. Grain rapporté jetable, inexable (114) présentant huit faces contiguës d'arête de longueur égale et deux faces octogonales de côté caractérisé en ce que le grain rapporté présente quatre coins alternés (140, 142, 144, 146) ayant des angles obtus égaux et des coins alternés restants (117, 141, 143, 145) ayant un angle ou des angles différents, les angles obtus égaux étant supérieurs aux angles restants, des arêtes coupantes (120, 121, 124, 125, 126, 127, 128, 129) étant formées à la jonction d'au moins l'une des faces octogonales de côté (130, 131) et de chacune des huit faces contiguës d'arête (132).

8. Grain rapporté selon la revendication 7, caractérisé en ce que les angles obtus (140, 142, 144, 146) sont égaux et ont une valeur comprise entre 135° et 170°.

9. Grain rapporté selon la revendication 7, caractérisé en ce que les angles obtus (140, 142, 144, 146) sont égaux et ont une valeur comprise entre 150° et 165°.

10. Grain rapporté selon la revendication 7, caractérisé en ce que les angles obtus (140, 142, 144, 146) sont égaux et ont comme valeur 160°±30'.

11. Grain rapporté selon la revendication 7, caractérisé en ce que les quatre angles obtus alternés égaux (140, 142, 144, 146) sont 160°±30', deux angles opposés (141, 145) sont 125°±30' et les deux autres angles obtus opposés (117, 143) sont 95°±30'.

12. Forêt (111) comprenant une queue (111) et une multitude de grains rapportés de coupe (114, 115) selon l'une quelconque des revendications 7 à 11, les grains rapportés (114, 115) étant disposés de façon qu'ils aient chacun un déplacement radial différent par rapport à l'axe de rotation du forêt, le grain intérieur (115) ayant un trajet de coupe qui chevauche l'axe de rotation du forêt et chaque grain extérieur suivant dans le sens radial (115) ayant un trajet de coupe qui chevauche le trajet de coupe du grain rapporté intérieur suivant (114), le trajet de coupe de chaque grain rapporté (114, 115) étant formé par les arêtes de coupe de chaque côté de l'un des angles obtus égaux (140, 142, 144, 146) du grain.

13. Forêt selon la revendication 12, caractérisé en ce qu'au moins une paire de grains octogonaux (114, 115) est disposée avec leurs arêtes coupantes le long d'un diamètre du forêt.

14. Forêt selon la revendication 13, caractérisé en ce que deux paires de grains octogonaux (114) sont disposées avec leurs arêtes coupantes le long d'au moins un diamètre du forêt.

*FIG.1*

*FIG. 2*

*FIG.3*

*FIG.4*

## FIG. 5

$r^1$   $r^2$

117   148   130

129

132

δ

131

## FIG. 6

160   161   163   166   164   162   165

165

162   119

T

# FIG.7